## Europäisches Patentamt

## European Patent Office

## Office européen des brevets

(11) Publication number: **0 149 741
B1**

(12) **EUROPEAN PATENT SPECIFICATION**

(45) Date of publication of patent specification: **09.08.89**

(51) Int. Cl.⁴: **C 03 C 25/02, C 03 C 17/30, G 02 B 6/02**

(21) Application number: **84113361.4**

(22) Date of filing: **07.11.84**

(54) **Liquid radiation-curable coating compositions and optical glass fibers coated therewith.**

(30) Priority: **10.11.83 US 550442**

(43) Date of publication of application:
**31.07.85 Bulletin 85/31**

(45) Publication of the grant of the patent:
**09.08.89 Bulletin 89/32**

(84) Designated Contracting States:
**BE DE FR GB IT NL**

(56) References cited:

**PATENT ABSTRACTS OF JAPAN, unexamined applications, vol. 4, no. 77, C field, June 4, 1980. THE PATENT OFFICE JAPANESE GOVERNMENT, page 67 C 13**

(73) Proprietor: **DeSOTO, INC.
1700 South Mt. Prospect Road
Des Plaines Illinois 60018 (US)**

(72) Inventor: **Bishop, Timothy E.
1631 N. Windsor No. 309
Arlington Heights Illinois 60 004 (US)**

(74) Representative: **Reitzner, Bruno, Dr.
Patentanwälte Dipl.-Ing. R. Splanemann Dr. B. Reitzner Tal 13
D-8000 München 2 (DE)**

**The file contains technical information submitted after the application was filed and not included in this specification**

**Description**

TECHNICAL FIELD

This invention relates to a liquid radiation-curable coating composition adapted to deposit, after radiation curing, an adherent cured coating on a glass surface, in particular on optical glass fibers, to improve adhesion to the glass, particularly after exposure to high humidity atmospheres. Ultraviolet radiation is particularly contemplated.

The coating of optical glass fibers with low tensile modulus resin coatings to protect these fibers against abrasion is known, as is the desirability of using coating compositions which cure rapidly on exposure to ultraviolet radiation for this purpose. In many instances it is desired to have the coating adhere strongly to the glass fiber surface, and to maintain this adhesion despite exposure to high humidity atmospheres. However, the ultraviolet-curing coatings which provide appropriate coatings for the optical glass fiber are not strongly adherent to the glass surface. Moreover, the limited adhesion which does exist is markedly impaired when moisture penetrates the coating.

JA—A—55—422 46 discloses a liquid radiation-curable coating composition for optical fibers comprising a polyethylenic polymeric compound and a polyalkoxy silane carrying an amino hydrogen atom. The polyalkoxy silane does not carry a single mercaptyl hydrogen atom which provides ultraviolet-cured coatings having remarkably better properties on optical fibers, more particularly, better adhesion.

It is desired to provide ultraviolet-curing coatings which cure to possess improved adhesion to the optical glass fiber surface, and which maintain the desired adhesion despite exposure to moisture.

DISCLOSURE OF INVENTION

In accordance with this invention, a liquid radiation-curable coating composition adapted to deposit, after radiation curing, an adherent cured coating on a glass surface is provided which comprises a radiation-curable polyethylenic polymeric organic compound, and from about 0.5% to about 5% of the coating composition of a polyalkoxy silane containing an organic substituent which carries a single mercaptyl hydrogen atom which is capable of reacting with ethylenic unsaturated by Michael adduction.

Preferred features of the coating composition are recited in the dependent claims.

Furthermore, the invention relates to an optical glass fiber having its glass surface adherently coated with an ultraviolet-cured coating of a liquid ultraviolet-curable coating composition as defined above. A single mercaptyl hydrogen atom is included, for example, in the preferred gamma-mercaptopropyl trimethoxy silane. For purposes of comparison, amino silanes with more than one active hydrogen atom are illustrated by gamma-aminopropyl triethoxy silane and N-beta-(N-vinylbenzylaminopropyl) trimethoxy silane. The amino silanes may be used as such, or provided as the hydrogen chloride or similar salt.

Coating the glass surface of optical fibers is particularly intended, so the coating composition should cure on radiation exposure to have a room temperature tensile modulus which is low enough (less than about 103 000 N/cm$^2$ = 150 000 psi) to minimize the danger of microbending. Acrylate unsaturation and ultraviolet cure are preferred.

The polyalkoxy silanes are preferably methoxy-substituted, most preferably trimethoxy substituted, with a single aliphatic substituent having only one amino or mercaptyl hydrogen atom. These apparently react with the ethylenic unsaturation, preferably acrylic in nature, either during or before radiation exposure. Regardless of when the reaction occurs, the limited coupling of the silane compound with the available ethylenic unsaturation provides superior adhesion and adhesion retention on humidity exposure.

Polyalkoxy silanes having other reactive groups have been tried, but these do not perform nearly as well as those employed herein.

When very low service temperatures are contemplated, optical glass fiber is presently protected by applying to the freshly formed glass fiber a buffer coating of a resin which preferably possesses an appropriate refractive index, e.g., in excess of 1.48, and a low tensile modulus (below 6900N/cm$^2$ = 10,000 psi preferably below 1380 N/cm$^2$ = 2000 psi) which remains low at very low temperature (−60°C) to minimize the danger of microbending when such low temperatures are encountered. These low tensile modulus buffer coatings are overcoated with a topcoat to provide enhanced moisture resistance and abrasion resistance. When higher service temperatures are contemplated, economy suggests a single coating, and these are selected to have a somewhat higher tensile modulus so that the coating on the glass will better resist abrasion and moisture. Regardless of which type of coating is applied to the glass, one still needs to minimize the tensile modulus while enhancing adhesion to the glass and while maintaining this adhesion despite exposure to humid atmospheres.

For rapid application and cure, coatings which cure on exposure to radiation, preferably ultraviolet radiation, are needed. As a result, the resistance to moisture and the capacity to maintain adhesion on exposure to moisture must be built into an ultraviolet curable coating composition which adheres to glass and which has ancillary properties appropriate to the coating of optical glass fibers.

Radiation-curable coatings for optical glass fiber may be of various types, but it is always necessary, in order to provide the low to moderate tensile modulus which is necessary in a coating which will contact the glass, to employ a polyethylenic polymeric organic compound. Many appropriate polyethylenic organic compounds are known, and those which are not liquid can be combined with unsaturated liquids to assist application, but it has been difficult to achieve preferred properties. Coatings of relatively low tensile modulus which are usually overcoated by coatings are disclosed in JA—A—223638/83. These can be described as ethylenic-terminated polyurethane, polyamide or polyurea oligomers having a molecular weight in the range of about 2000 to about 8000 and containing one amide, urea or urethane group for every 300 to 900 units of molecular weight, and containing polyalkylene polyether, polyalkylene polythiol or polyalkylene polyester in which the alkylene moiety contains 2 to 6 carbon atoms. These are preferably diacrylate polyurethane-ureas, and they are combined with 20% to 50% of the composition of a radiation-curable monoethylenic monomer having a $T_g$ below about −10°C, such as phenoxyethyl acrylate, and with 2% to 20% of a monoethylenic monomer having a strong capacity for hydrogen bonding, such as N-vinyl pyrrolidone.

An illustrative coating of the above type is made by reacting 4 moles of 5,5'-methylene bis(cyclohexyl isocyanate) with 2 moles of polyoxypropylene glycol of molecular weight 230 in the presence of 3.4 moles of N-vinyl pyrrolidone and 9.7 moles of phenoxyethyl acrylate. This mixture, with 3% of diethoxy acetophenone as photoinitiator, can be ultraviolet-cured on freshly drawn optical glass fiber, and it can be modified to enhance retention of adhesion to the glass on humidity exposure in accordance with this invention. This composition is used as the control and in the tabulated modifications of the control which are evaluated hereinafter in Example 3.

Another type of very low tensile modulus coatings which is usually overcoated is described in EP—A—0113 779. These coatings can be described as consisting essentially of an organic polysiloxane having from 2 to 6 reactive side chains each of which carry a functional group providing one reactive site which has been reacted to provide a single radiation-curable monoethylenically unsaturated side chain. There is about one such side chain for every 500 to 5000 units of molecular weight. This preferably provides a prime coating which has a tensile modulus at room temperature (25°C) and also at −60°C which is below 2070 N/cm² (3000 psi).

These coatings can be illustrated by reacting one mole of 2-hydroxyethyl acrylate with one mole of isophorone diisocyanate to produce an acrylate-functional urethane monoisocyanate and then reacting three moles of this reaction product with one mole of tris(2-hydroxy polyoxypropyl) polysiloxane of average molecular weight of 6000 and equivalent weight of 2000 (80% methyl substituted and 20% polyoxypropyl substituted). Upon the addition of 3% of diethoxy acetophenone photoinitiator, the mixture can be ultraviolet-cured on freshly drawn optical glass fiber, and it can be modified to enhance adhesion on exposure to humid atmospheres in accordance with this invention.

Moderate modulus coatings which are useful without topcoating can be provided by combining: (1) from 65% fo 85% of a diethylenic-terminated polyurethane, which may contain urea groups, this polyurethane being based on a diisocyanate having an average molecular weight of from 400 to 40000; and (2) from 5% to 25% of a radiation-curable monoethylenically unsaturated liquid monomer having a $T_g$ below about −20°C. These are illustrated by an adduct of two moles of 2-hydroxyethyl acrylate with one mole of a diisocyanate-terminated polyurethane made by adducting toluene diisocyanate with a polytetramethylene glycol formed by polymerizing tetrahydrofuran to a molecular weight of 600—800. The polyurethane formed by acrylating this diisocyanate has a molecular weight of about 1900. 75.4 parts of this product mixed with 2.5 parts of benzophenone, 0.4 parts of benzil dimethyl ketal photoinitiator, 9 parts of trimethylol propane triacrylate and 12.4 parts of ethoxy ethoxyethyl acrylate provides a coating composition which can be coated upon optical glass fiber and ultraviolet cured to provide an effective single-coated product which is used as the control in the Table presented hereinafter. This coating composition can also be modified in accordance with this invention to increase its capacity to retain adhesion to the glass upon high humidity exposure.

All proportions herein are by weight, unless otherwise specified, and $T_g$ denotes the glass transition temperature which, for a monomer, is the glass transition temperature of a homopolymer made from that monomer.

Since ultraviolet cure is preferred, acrylic unsaturation is best, but since the radiation can vary, electron beam radiation is useful, though less preferred, so the character of the ethylenic unsaturation can vary. Other useful unsaturations are illustrated by methacrylic, itaconic, crotonic, allylic, vinylic, etc. These can be provided (using methacrylic unsaturation as illustrative) by reaction of isocyanate functionality with 2-hydroxyethyl methacrylate. Allylic unsaturation may be introduced using allyl alcohol in place of 2-hydroxyethyl acrylate. Vinylic unsaturation may be introduced using hydroxy butyl vinyl ether.

Accordingly, while acrylate unsaturation has been referred to previously as illustrative and preferred, other radiation curable monoethylenically unsaturated compounds may be used, though more powerful radiation would be necessary, as illustrated by electron beam radiation.

The radiation which effects cure will vary with the photoinitiator used. Even visible light may be employed using appropriate photoinitiators. These are illustrated by camphor quinone and coumarin which are used together with a tertiary amine, such as triethylamine. Diphenylbenzoylphosphine oxide is useful in and near the ultraviolet range.

3

When ultraviolet light is employed, the coating composition will usually contain a ketonic photoinitiator, such as about 3% of diethoxy acetophenone. Other photoinitiators are also known, such as acetophenone, benzophenone, m-chloro-acetophenone, propiophenone, thioxanthone, benzoin, benzil, anthraquinone, and the like. The photoinitiators may be used singly or in mixtures, and are present in an amount up to about 10% of the coating, usually 1—5%. Various amines may also be added, like diethyl amine, but are not needed in many instances.

The invention is illustrated by a series of coating compositions formulated by simple mixing of the components tablulated below. The mixture is warmed to about 55°C for 1 hour to dissolve all of the components.

TABLE

| Component | Control | Ex. 1 | Ex. 2 |
|---|---|---|---|
| 1-Urethane acrylate oligomer | 75.7 | — | — |
| 2-Trimethylolpropane triacrylate | 9.0 | — | — |
| 3-Ethoxy ethoxyethyl acrylate | 12.4 | — | — |
| 4-Benzyl dimethyl ketal | 0.4 | — | — |
| 5-Benzophenone | 2.5 | — | — |
| 6-Items 1—5 combined | — | 99.0 | 99.0 |
| 7-Gamma-aminopropyl triethoxy silane | — | 1.0 | — |
| 8-N-Beta-(N-vinylbenzylaminoethyl)-gamma-aminopropyl trimethoxy silane.hydrogen chloride (40% in methanol) | — | — | 1.0 |
| Adhesion (g/25.4 mm/see note 1) | 24/11 | 123/71 | 131/49 |

Note 1: This is a 180° peel test on a 0.076 mm (3 mil) glass. The film is pulled back upon itself to measure the force which removes the film from the glass. The first number is the initial adhesion. The second number is the adhesion after 24 hours exposure of the coated glass to 95% relative humidity at 25°C.

As can be seen, polyalkoxy silanes improve adhesion and retention of adhesion on humidity exposure, but further improvement is provided herein.

Example 3

An ultraviolet curable optical fiber coating composition which cured to provide excellent initial adhesion of 442 gm/25.4 mm was greatly damaged by 24 hours exposure to 95% relative humidity at 25°C such that the adhesion after exposure was only 9 gm/25.4 mm. This composition was modified to include 0.6% of diphenyl amine and 0.3% of dilauryl thiodipropionate and 1% of gamma aminopropyl triethoxysilane. The initial adhesion was improved to 561 gm/25.4 mm. After humidity exposure adhesion had only decreased to 86.8 gm/25.4 mm. Replacing in accordance with this invention, the aminosilane with 1% of gamma-mercaptopropyl trimethoxy silane provided an initial adhesion of 604 gm/25.4 mm. This initial adhesion only decreased to 245 gm/25.4 mm after the specified humidity exposure.

**Claims**

1. A liquid radiation-curable coating composition adapted to deposit, after radiation curing, an adherent cured coating on a glass surface, comprising a radiation-curable polyetylenic polymeric organic compound, and from about 0.5 % to about 5% of the coating composition of a polyalkoxy silane containing an organic substituent which carries a single mercaptyl hydrogen atom which is capable of reacting with ethylenic unsaturation by Michael adduction.

2. A coating composition as recited in claim 1 in which said radiation-curable polymeric organic compound is acrylate-functional.

3. A coating composition as recited in claim 2 in which said radiation-curable acrylate-functional polymeric organic compound is a polyurethane or a polyurethane urea.

4. A coating composition as recited in claim 1 in which said composition cures to provide a film having a tensile modulus less than abnout 103 000 N/cm².

5. A coating composition as recited in claim 1 in which said composition cures to provide a film having a tensile modulus less than about 6900 N/cm².

6. A coating composition as recited in claim 1 in which said radiation-curable polyethylenic organic

4

compound is acrylate-functional, and a photoinitiator is present to render said composition curable with ultraviolet radiation.

7. An optical glass fiber having its glass surface adherently coated with an ultraviolet-cured coating of a liquid ultraviolet-curable coating composition adapted to deposit, after said ultraviolet cure, an adherent cured coating on a glass surface, said composition comprising an ultraviolet-curable polymeric polyacrylate, a photoinitiator to render said composition curable with ultraviolet light, and from about 0.5% to about 5% of the coating composition of a polyalkoxy silane containing an organic substituent carrying a single mercaptyl hydrogen atom capable of reacting with acrylate unsaturation by Michael adduction.

**Patentansprüche**

1. Flüssige, durch Strahlung härtbare Überzugsmasse, die nach der Aushärtung durch Strahlung in der Lage ist, einen haftenden ausgehärteten Überzug auf einer Glasplatte abzuscheiden, enthaltend eine durch Strahlung härtbare polyäthylenische polymere organische Verbindung und etwa 0,5 bis etwa 5%, bezogen auf die Überzugsmasse, eines Polyalkoxysilans, das einen organischen Substituenten enthält, welcher ein einziges Mercaptyl-Wasserstoffatom trägt, das in der Lage ist, durch eine Michael-Adduktion mit einer äthylenischen Unsättigung zu reagieren.

2. Überzugsmasse nach Anspruch 1, worin die durch Strahlung aushärtbare polymere organische Verbindung acrylat-funktionell ist.

3. Überzugsmasse nach Anspruch 2, worin die durch Strahlung härtbare Acrylat-funktionelle polymere organische Verbindung ein Polyurethan oder ein Polyurethan-Harnstoff ist.

4. Überzugsmasse nach Anspruch 1, worin die Masse zu einem Film mit einem Zugmodul von weniger als etwa 103 000 N/cm² aushärtet.

5. Überzugsmasse nach Anspruch 1, worin die Masse zu einem Film mit einem Zugmodul von weniger als etwa 6900 N/cm² aushärtet.

6. Überzugsmasse nach Anspruch 1, worin die durch Strahlung härtbare polyäthylenische polymere organische Verbindung acrylat-funktionell ist und worin ein Photoinitiator vorhanden ist, um die Masse durch Ultraviolett-Strahlung härtbare zu machen.

7. Optische Glasfaser, dessen Glasoberfläche haftend mit einem ultraviolett gehärteten Überzug aus einer flüssigen ultraviolett-härtbaren Überzugsmasse beschichtet ist, die in der Lage ist, nach der Ultraviolett-Härtung einen haftenden ausgehärteten Überzug auf einer Glasoberfläche abzuscheiden, wobei die Masse ein ultraviolett-härtbares polymeres Polyacrylate, einen Photoinitiator, um die Masse mit ultraviolettem Licht härtbar zu machen, und etwa 0,5 bis etwa 5%, bezogen auf die Überzugsmasse, eines Polyalkoxysilans enthält, das einen organischen Substituenten enthält, der ein einziges Mercaptyl-Wasserstoffatom trägt, das in der Lage ist, durch Michael-Adduktion mit der Acrylat-Unsättigung zu reagieren.

**Revendications**

1. Composition liquide de revêtement durcissable au rayonnement appropriée pour déposer, après durcissement par rayonnement, un revêtement adhérent durci sur une surface de verre, comprenant un composé organique polymère polyéthylénique durcissable par rayonnement et de 0,5% environ à 5% environ de la composition de revêtement étant un polyalcoxysilane contenant un substituant organique qui porte un hydrogène mercaptyle unique qui peut réagir avec une liaison éthylénique insaturée par addition de Michael.

2. Composition de revêtement selon la revendication 1 dans laquelle ledit composé polymère organique durcissable au rayonnement est à fonction acrylate.

3. Composition de revêtement selon la revendication 2 dans laquelle ledit composé polymère organique à fonction acrylate durcissable au rayonnement est un polyuréthanne ou une polyuréthanne-urée.

4. Composition de revêtement selon la revendication 1 dans laquelle ladite composition durcit pour donner un film ayant un module de traction inférieur à 103 000 N/cm² environ.

5. Composition de revêtement selon la revendication 1 dans laquelle ladite composition durcit pour donner un film ayant un module de traction inférieur à 6900 N/cm² environ.

6. Composition de revêtement selon la revendication 1 dans laquelle ledit composé organique polymère polyéthylénique durcissable au rayonnement est à fonction acrylate, et un photo-initiator est présent pour rendre ladite composition durcissable au rayonnement ultraviolet.

7. Fibre de verre optique ayant sa surface de verre revêtue de manière adhérente avec une composition de revêtement liquide durcissable aux ultra-violets, appropriée pur déposer après ledit durcissement par ultra-violets, un revêtement adhérent durci sur une surface de verre, ladite composition comprenant un polyacrylate polymère durcissable aux ultraviolets, un photoinitiateur pour rendre ladite composition durcissable à la lumière ultraviolette et de 0,5% environ à 5% environ de la composition de revêtement étant un polyalcoxysilane contenant un substituant organique qui porte un atome d'hydrogène mercaptyle unique qui peut réagir avec une liaison éthylénique insaturée par addition de Michael.